# EUROPÄISCHE PATENTSCHRIFT

(11) **EP 2 965 936 B1**
(45) Veröffentlichungstag und Bekanntmachung des Hinweises auf die Patenterteilung: **06.03.2019**
(21) Anmeldenummer: 15001552.7
(22) Anmeldetag: 22.05.2015
(51) Int. Cl.: B60K 11/08

(54) **VORRICHTUNG ZUR STEUERUNG DES LUFTSTROMES DURCH DEN KÜHLER EINES STRASSENFAHRZEUGES**
DEVICE FOR CONTROLLING THE AIR FLOW THROUGH THE COOLER OF A ROAD VEHICLE
DISPOSITIF DE COMMANDE DE L'ÉCOULEMENT D'AIR À TRAVERS LE REFROIDISSEUR D'UN VÉHICULE ROUTIER

(30) Priorität: 07.07.2014 CH 10342014
(43) Veröffentlichungstag der Anmeldung: 13.01.2016
(73) Patentinhaber: Kunststoff Schwanden AG, 8762 Schwanden (CH)
(72) Erfinder: Kiener, Albert, CH-8753 Mollis (CH); Küsperth, Josef, 74024 Manduria (CH)
(74) Vertreter: Quehl, Horst Max

(56) Entgegenhaltungen:
- CH-A2- 699 248
- DE-A1- 4 300 577
- DE-A1- 4 414 893
- DE-A1-102008 043 006

## Beschreibung

Die Erfindung betrifft eine Vorrichtung zur Steuerung des Luftstromes durch einen ebenflächigen Kühler eines Strassenfahrzeuges, mit einer Kühlerzarge, deren am Kühler befestigter, haubenringartiger, äusserer Zargenbereich in einen zylindrischen Luftschacht übergeht und dessen zentrale Nabe über Radialstreben mit diesem verbundenen ist, mit einem an der Nabe befestigten, einen elektrischen Antrieb und ein Schaufelrad aufweisenden Gebläse und mit einer radial gerichtete Lamellen aufweisenden, mit einem Stellantrieb verbundenen Kühlerjalousie, deren zumindest radial äusseren Lamellenlagerzapfen in axialer Richtung zwischen dem haubenringartigen, äusseren Zargenbereich und dem Schaufelrad des Gebläse angeordnet sind,

Eine Vorrichtungen dieser Art ist bekannt durch die DE 10 2005 021 676 oder CH 699 248 A2.

Durch die DE 100 47 952 ist eine Vorrichtung bekannt, bei der die Lamellen ihrer Kühlerjalousie direkt in einer hierfür speziell ausgebildeten Zarge gelagert sind, indem die radial äusseren Lagerzapfen ihrer Lamellen in einen am zylindrischen Luftschacht der Zarge innen angeformten Nabenring eingeschoben sind und die äusseren Lagerzapfen der Lamellen in einer zweigeteilten, zentralen Nabe eingefügt werden. Die Verdrehung der Lamellen um ihre Längsachse erfordert auch aufwändige Stellmittel mit einer sich durch den zylindrischen Luftschacht der Zarge hindurch erstreckenden Schubstange. Der Erfindung liegt die Aufgabe zugrunde, eine Vorrichtung der eingangs genannten Art hinsichtlich ihrer Baugrösse, insbesondere in Strömungsrichtung und hinsichtlich Vereinfachung ihrer Herstellung zu verbessern. Die Lösung dieser Aufgabe erfolgt aufgrund der kennzeichnenden Merkmale des Patentanspruchs 1. Vorteilhafte Ausgestaltungen der Erfindung sind Gegenstand der abhängigen Patentansprüche.

Im Folgenden wird die Erfindung an Hand eines in den Zeichnungen dargestellten Ausführungsbeispieles näher erläutert. Es zeigt:
Fig.1 einen von ihrer Mittelachse ausgehenden Radialschnitt durch eine erfindungsgemässe Vorrichtung,
Fig.2 einen Radialschnitt des Gebläses nach Fig.1,
Fig.3 einen Radialschnitt der Kühlerzarge der Vorrichtung nach Fig.1 mit einer separaten Ansicht eines Stellantriebes,
Fig.4 einen über ihre Mittelachse hinaus verlaufenden Radialschnitt durch die Kühlerzarge der Vorrichtung nach Fig.1,
Fig.5 einen Radialschnitt der Kühlerzarge nach Fig.3 mit eingesetztem Gebläse,
Fig.6 Einzelteile der Kühlerjalousie der Vorrichtung nach Fig. 1 vor ihrer Zusammenfügung, mit einem Montagering, einer Gruppierung von radial ausgerichteten Lamellen der Kühlerjalousie, einem Gegenlagerring für den Montagering und mit einem Stellring,
Fig.7 einen unvollständigen Radialschnitt durch die Vorrichtung nach Fig.1 im Bereich einer Radialstrebe der Kühlerzarge und eines elektrischen Verbindungsstranges des Gebläseantriebes,
Fig.8 eine perspektivische Darstellung eines Sektors der Kühlerjalousie mit zugordnetem Stellantrieb und
Fig.9 einen radialen Teilschnitt der Kühlerjalousie im Bereich der Lagerung einer ihrer Lamellen.

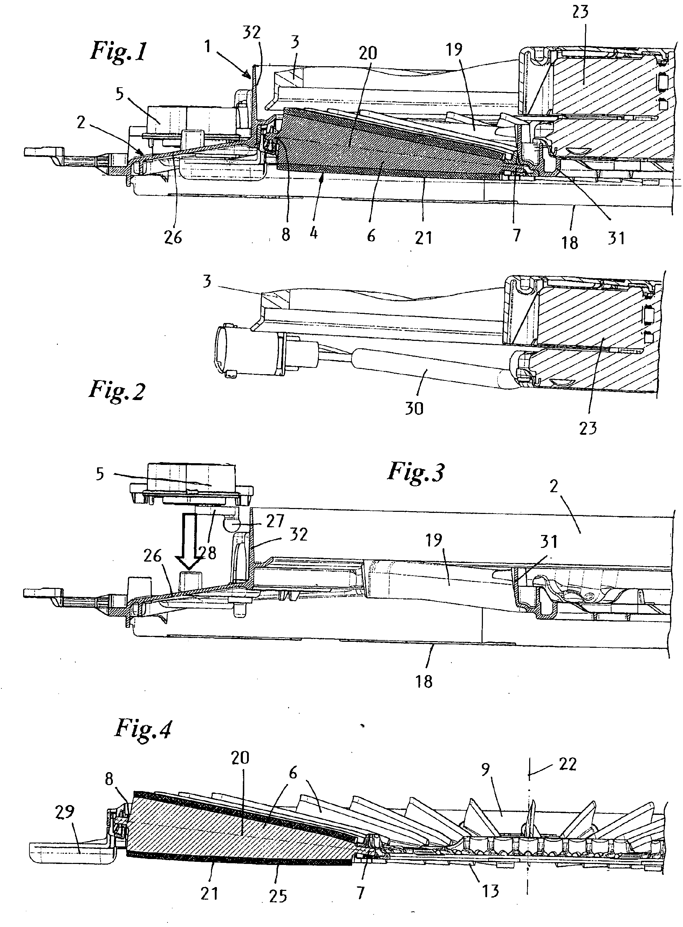

Wie die Darstellungen des ersten Zeichungsblattes veranschaulichen, besteht die in Fig.1 dargestellte, erfindungsgemässe Vorrichtung 1 aus vier unabhängig voneinander herstellbaren und zusammenfügbaren Baugruppen, entsprechend den Darstellungen in Fig. 2 bis Fig.4, d.h. der Kühlerzarge 2 nach Fig.3, dem Gebläse 3 nach Fig.2, der Kühlerjalousie 4 nach Fig.4 und dem in Fig.3 dargestellten Stellantrieb 5 der Kühlerjalousie.

Die Verwendung solcher Baugruppen hat bei der Herstellung der Vorrichtung 1 oder bei deren Einbau in ein Strassenfahrzeug u.a. den Vorteil, dass z.B. der Einbau des Gebläses 3 oder der Kühlerjalousie 4 in die Kühlerzarge, unabhängig von der Produktionsstätte, zuerst oder zuletzt erfolgen kann. Ausserdem ist es möglich, die Kühlerzarge 2 ohne die Kühlerjalousie 4, d.h. nur für den Anbau des Gebläses 3 am Kühler eines Strassenfahrzeuges zu verwenden.

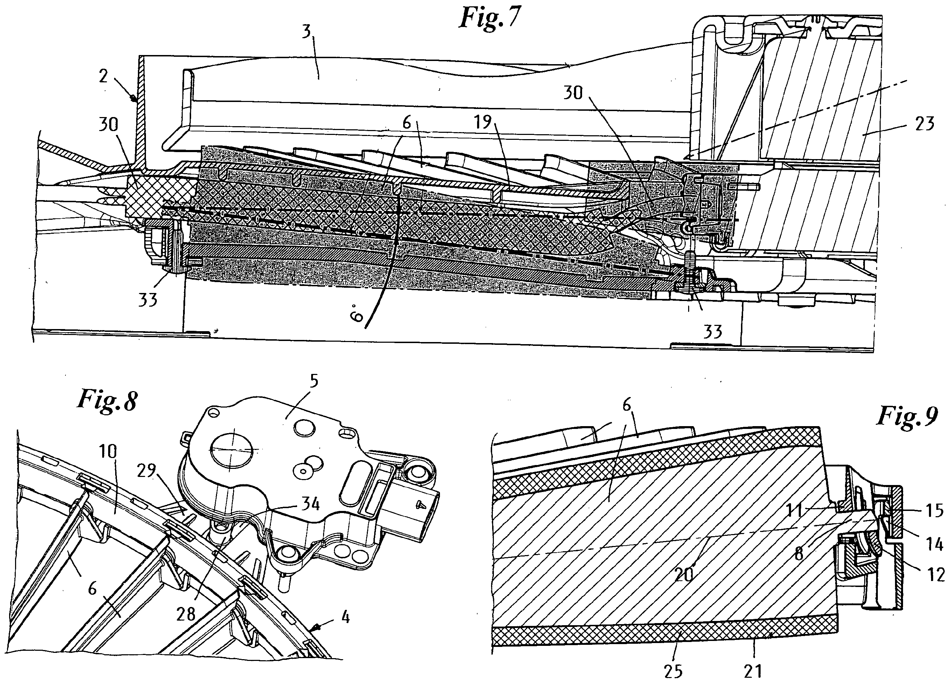

Weitere wesentliche Vorteile einer erfindungsgemässen Vorrichtung, hinsichtlich einfacher bzw. kostengünstiger Herstellbarkeit und hinsichtlich eines besonders geringen Raumbedarfs in einem Strassenfahrzeug, sind der folgenden Beschreibung des in den Fig. 1 bis 8 dargestellten Ausführungsbeispieles zu entnehmen.

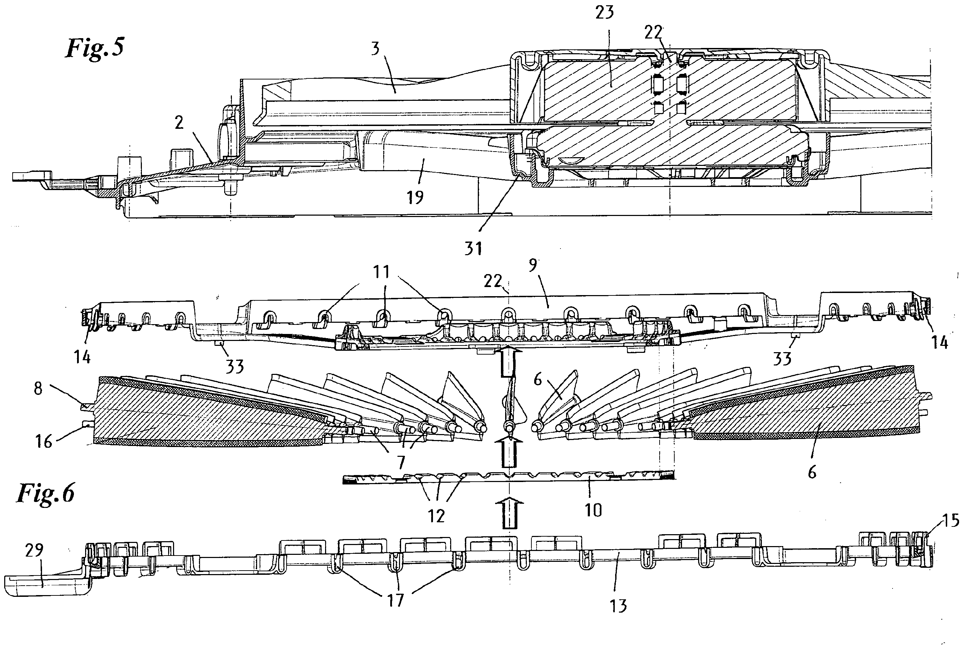

Die Kühlerjalousie 4 bildet eine in die Kühlerzarge 2 einsetzbare und z.B. mittels axial is eingreifende Schrauben 33 befestigbare, selbständige Baueinheit, wie sie mit ihren Einzelteilen in Fig.6 und zusammengesetzt in Fig.4 dargestellt ist. Das Zusammensetzen dieser Einzelteile ist auf einfache Weise durch eine axiale Montagebewegung möglich, indem die zuvor radial angeordneten Lamellen 6 mit ihren radial inneren und radial äusseren Lagerzapfen 7, 8, beim Anfügen eines Montageringes 9 und eines Schliessringes 10, zwischen deren Halblagerschalen 11,12 eingeschlossen werden.

Abschliessend wird ein gegenüber dem Montagering 9 in Umfangsrichtung verschiebbarer Stellring 13, z.B. durch Verrastung über Rastnasen 14,15, angefügt, so dass die am äusseren Ende jeder Luftleitlamelle 6 in Abstand von einem Lagerzapfen 8 vorgesehenen Stellzapfen 16 in ringförmig nebeneinander vorgesehenen Zapfenaufnahmen 17 des Stellringes 13 zum Eingriff gelangen.

Die Halblagerschalen 11 des Montageringes 9 sind vorzugsweise gegenüber denjenigen des Schliessringes 10 in Richtung der Lagerzapfen 7, 8 in axialer Richtung zueinander versetzt, so dass durch die somit einseitig offene Lagerung der Lagerzapfen 7, 8 eine Selbstreinigung der Lamellenlagerungen erreicht wird, bzw. ein Festsetzen von Lagerzapfen in Lagerschalen verhindert wird.

Die entsprechend der Darstellung in Fig. 4 selbständige Kühlerjalousie 4 ist in die dazu passende, für den Kühler 18 eines Strassenfahrzeuges vorgesehenen Kühlerzarge 2 derart einfügbar, dass ihre Lamellen 6 in den Raum zwischen den geneigt nach innen in Richtung zu dem Kühler 18 erstreckenden Radialstreben 19 eingreifen. Auf diese Weise ergibt sich für die erfindungsgemässe Vorrichtung eine besonders wenig Raum beanspruchende, flache Bauweise.

Eine flache Bauweise der Vorrichtung 1 wird weiterhin dadurch begünstigt, dass die Schwenkachse 20 der sich keilförmig nach aussen verbreiternden Lamellen 6 in Richtung vom Kühler weg bzw. in Durchströmungsrichtung der Vorrichtung 1 schräg nach aussen im Winkel zwischen 4° bis 8° und vorzugsweise 6° gerichtet sind.

Ausserdem verläuft In vollständig geöffneter Schwenkposition der Lamellen 6 die angeströmte Vorderkante 21 der Lamellen 6 vorzugsweise parallel zum Fahrzeugkühler 18 bzw. radial zur Mittelachse 22 der Vorrichtung 1.

Der folglich verhältnismässig geringe Abstand der Lamellen 6 zum Fahrzeugkühler 18 ist mit Rücksicht auf eine einzuhaltende Distanz für eine Crash-Verformung und Geringhaltung von einem Crash folgenden Reparaturkosten akzeptabel, da in diesem Bereich ein geringerer Verformungsweg zu erwarten ist als im Bereich des Elektromotors 23 des Gebläses 3.

Eine weitere Verringerung dieses Abstandes der Lamellen 6 vom Kühler 18 ist dadurch möglich, dass zumindest ein bei vollständig geöffneter Schwenkposition der Lamellen 6 vorderer, bzw. dem Kühler 18 zugekehrter, die Vorderkante 21 aufweisender, streifenförmiger Lamellenbereich 25 aus einem leicht verformbaren, d.h. weichelastischen bzw. weichgummiartigen Material am festeren Material der Lamelle 6 angeformt ist.

Die Verdrehung des Stellringes 13 zur Verstellung des Anstellungswinkels der Lamellen 6 erfolgt durch einen am haubenartigen äusseren Zargenbereich 26 befestigten Stellantrieb 5, dessen mit einem Kugelzapfen 27 versehener Kurbelarm 28 im Steuerkanal 34 eines seitlichen Fortsatz 29 des Stellringes 13 eingreift. Derartige seitliche Fortsätze 29 können an mehreren Umfangsstellen des Stellringes 13 angeformt sein, ebenso wie an entsprechenden Stellen des äusseren Zargenbereichs 26 für den Stellantrieb 5 Befestigungsmittel angeformt sein können. Dies ermöglicht, in Abhängigkeit von der Bauweise des Strassenfahrzeug, eine optimale Positionierung des Stellantriebs 5.

Weiterhin begünstigt die schräg nach aussen vom Kühler 18 weg gerichtete Ausrichtung der Radialstreben 19 der Kühlerzarge 2 und entsprechend der Schwenkachsen 20 der Lamellen 6, das raumsparende Einfügen eines Kabelstranges 30, indem dieser, eingebettet in einem einseitig offenen Hohlquerschnitt einer Radialstrebe 19 der Kühlerzarge 2 zu deren zentralen Nabe 31 und durch diese hindurch zu dem in ihr eingeschlossenen Elektromotor 23 führt.

## Patentansprüche

1. Vorrichtung zur Steuerung des Luftstromes durch einen ebenflächigen Kühler (18) eines Strassenfahrzeuges, mit einer Kühlerzarge (2), deren am Kühler befestigter, haubenringartiger, äusserer Zargenbereich (26) in einen zylindrischen Luftschacht (32) übergeht und dessen zentrale Nabe (31) über Radialstreben (19) mit diesem verbundenen ist, mit einem an der Nabe (31) befestigten, einen elektrischen Antrieb (23) und ein Schaufelrad aufweisenden Gebläse (3) und mit einer radial gerichtete Lamellen (6) aufweisenden, mit einem Stellantrieb (5) verbundenen Kühlerjalousie (4), deren zumindest radial äusseren Lamellenlagerzapfen (8) in axialer Richtung zwischen dem haubenringartigen, äusseren Zargenbereich (26) und dem Schaufelrad des Gebläse (3) angeordnet sind, **dadurch gekennzeichnet, dass** die Kühlerjalousie (4) eine selbständig zusammenhaltende, für die Einfügung zwischen dem Kühler (18) und den Radialstreben (19) der Kühlerzarge (2) bestimmte Baueinheit bildet, dadurch dass radial innere und radial äussere Lagerzapfen (7, 8) der Lamellen (6) der Kühlerjalousie (4) zwischen einem Montagering (9) und einem Schliessring (10) eingeschlossen sind und am äusseren Ende der Lamellen (6) vorgesehene Stellzapfen (16) in Zapfenaufnahmen (17) eines Stellringes (13) eingreifen, der über Rastmittel (14,15) mit dem Montagering (9) verrastet ist.

2. Vorrichtung nach Anspruch 1, **dadurch gekennzeichnet, dass** bei geöffneter Kühlerjalousie (4) sich ihre Lamellen (6) in den Raum zwischen den Radialstreben (19) der Kühlerzarge (2) hinein erstrecken.

3. Vorrichtung nach Anspruch 1 oder 2, **dadurch gekennzeichnet, dass** die Radialstreben (19) der Kühlerzarge (2), in Richtung zum Kühler (18) geneigt, zur Nabe (31) der Kühlerzarge (2) verlaufen.

4. Vorrichtung nach einem der Ansprüche 1 bis 3, **dadurch gekennzeichnet, dass** die Schwenkachsen (20) der Lamellen (6) der Kühlerjalousie(4), vom Kühler (18) weg geneigt, radial nach aussen gerichtet sind.

5. Vorrichtung nach Anspruch 4, **dadurch gekennzeichnet, dass** der Neigungswinkel der Lamellen (6) im Bereich von 4° bis 8° liegt.

6. Vorrichtung nach einem der Ansprüche 1 bis 5, **dadurch gekennzeichnet, dass** bei vollständig geöffneter Kühlerjalousie (4) eine Vorderkante (21) ihrer Lamellen (6) parallel zum Kühler (18) gerichtet ist.

7. Vorrichtung nach einem der Ansprüche 1 bis 6, **dadurch gekennzeichnet, dass** zumindest ein in geöffneter Position dem Kühler(18) zugekehrter, ihre Vorderkante (21) bildender, streifenförmiger Lamellenbereich (25) der Lamellen (6) aus einem weichelastischen Material besteht und am festeren Material der Lamelle (6) angeformt ist.

8. Vorrichtung nach einem der Ansprüche 1 bis 7, **dadurch gekennzeichnet, dass** der Stellring (13) auf der dem Kühler (18) zugekehrten Seite der Kühlerjalousie (4) angeordnet ist.

9. Vorrichtung nach Anspruch 8, **dadurch gekennzeichnet, dass** ein am haubenartigen äusseren Zargenbereich (26) vorgesehener Stellantrieb (5) über einen Kurbelarm (28) und einen an diesem vorgesehenen Kugelzapfen (27) in einen Steuerschlitz (34) eingreift, der in einem am Stellring (13) aussen angeformten Fortsatz (29) des Stellringes (13) vorgesehen ist.

10. Vorrichtung nach einem der Ansprüche 1 bis 9, **dadurch gekennzeichnet, dass** die radial äusseren und radial inneren Lagerzapfen (8, 7) der Lamellen (6) in halbschalenförmigen Ausformungen (11,12) eines Montageringes (9) und eines Schliessringes (10) der Kühlerjalousie (4) gelagert sind, wobei der Montagering (9) an der Kühlerzarge (2) befestigt ist.

11. Vorrichtung nach Anspruch 10. **dadurch gekennzeichnet, dass** die halbschalenförmigen Ausschnitte (11,12) des Montageringes (9) und des Schliessringes (10) in Richtung der Lagerzapfen (7, 8) zueinander versetzt angeordnet sind.

12. Vorrichtung nach einem der Ansprüche 1 bis 11, **dadurch gekennzeichnet, dass** ein elektrischer Kabelstrang (30) des elektrischen Gebläseantriebes (23) sich entlang einer der Radialstreben (19) der Kühlerzarge erstreckt.

13. Vorrichtung nach einem der Ansprüche 1 bis 12. **dadurch gekennzeichnet, dass** ihr Stellring (13) auf ihrer dem Kühler (18) zugekehrten Seite angeordnet ist.

14. Vorrichtung nach Anspruch 13. **dadurch gekennzeichnet, dass** an mehreren Umfangsstellen des Stellringes (13) ein für den Eingriff eines Stellantriebes (5) bestimmter seitlicher Fortsatz (29) vorgesehen ist.

## Claims

1. Device for controlling the air flow by means of a planar cooler (18) of a road vehicle, having a cooler frame (2) whose outer frame region (26) that is fixed on the cooler and shaped like a hood ring passes into a cylindrical air shaft (32) and whose central hub (31) is connected to this via radial struts (19), having a fan (3) that is fixed on the hub (31) and has an electrical drive (23) and a blade wheel, and having a cooler shutter (4) that has radially aligned lamellae (6) and is connected to an actuator (5), the at least radially outer lamellae bearing pins (8) of said cooler shutter (4) being arranged in an axial direction between the hood ring-like outer frame region (26) and the blade wheel of the fan (3), **characterised in that** the cooler shutter (4) forms an assembly that holds together independently and is designed for insertion between the cooler (18) and the radial struts (19) of the cooler frame (2), **in that** radially inner and radially outer bearing pins (7, 8) of the lamellae (6) of the cooler shutter (4) are enclosed between a mounting ring (9) and a closing ring (10) and actuating pins (16) provided on the outer end of the lamellae (6) engage in pin receivers (17) of an actuating ring (13), which is latched to the mounting ring (9) via latching means (14, 15).

2. Device according to claim 1, **characterised in that**, with an open cooler shutter (4), its lamellae (6) extend into the space between the radial struts (19) of the cooler frame (2).

3. Device according to claim 1 or 2, **characterised in that** the radial struts (19) of the cooler frame (2), inclined in the direction of the cooler (18), run towards the hub (31) of the cooler frame (2).

4. Device according to one of claims 1 to 3, **characterised in that** the pivoting axes (20) of the lamellae (6) of the cooler shutter (4), inclined away from the cooler (18), are aligned radially outwards.

5. Device according to claim 4, **characterised in that** the angle of inclination of the lamellae (6) ranges from 4° to 8°.

6. Device according to one of claims 1 to 5, **characterised in that**, with a completely open cooler shutter (4), a front edge (21) of its lamellae (6) is aligned in parallel to the cooler (18).

7. Device according to one of claims 1 to 6, **characterised in that** at least one strip-shaped lamella region (25) of the lamellae (6), said lamella region (25) facing towards the cooler (18) in the open position and forming its front edge (21), consists of a flexible material and is moulded on the more solid material of the lamellae (6).

8. Device according to one of claims 1 to 7, **characterised in that** the actuating ring (13) is arranged on side of the cooler shutter (4) facing towards the cooler (18).

9. Device according to claim 8, **characterised in that** an actuator (5) provided on the outer frame region (26) shaped like a hood ring engages in a control slot (34) via a crank arm (28) and a ball pin (27) provided on this, said control slot (34) being provided in a projection (29) of the actuating ring (13), said projection (29) being moulded outwardly on the actuating ring (13).

10. Device according to one of claims 1 to 9, **characterised in that** the radially outer and radially inner bearing pins (8, 7) of the lamellae (6) are stored in half-shell-shaped recesses (11, 12) of a mounting ring (9) and a closing ring (10) of the cooler shutter (4), wherein the mounting ring (9) is fixed to the cooler frame (2).

11. Device according to claim 10, **characterised in that** the half-shell-shaped cut-outs (11, 12) of the mounting ring (9) and the closing ring (10) are arranged offset relative to one another in the direction of the bearing pins (7, 8).

12. Device according to one of claims 1 to 11, **characterised in that** an electrical wiring harness (30) of the electric fan drive (23) extends along one of the radial struts (19) of the cooler frame.

13. Device according to one of claims 1 to 12, **characterised in that** its actuating ring (13) is arranged on its side facing towards the cooler (18).

14. Device according to claim 13, **characterised in that** a lateral projection (29) intended for the engagement of an actuator (5) is provided on several circumferential points of the actuating ring (13).

## Revendications

1. Dispositif de contrôle de l'écoulement d'air à travers un refroidisseur (18) à face plane d'un véhicule routier, comportant un carénage de refroidisseur (2), dont la zone de carénage (26) extérieure en forme d'anneau de capot fixée sur le refroidisseur passe dans un conduit d'aération cylindrique (32) et dont le moyeu (31) central est relié à celui-ci par le biais de bras rayonnants (19), comportant un entraînement électrique (23) fixé au moyeu (31) et un ventilateur (3) présentant une roue à palettes et comportant un volet de refroidissement (4) orienté radialement présentant des ailettes (6), relié à un actionneur (5), des tourillons de palier d'ailettes (8) externes au moins radiales dudit volet de refroidissement étant disposées dans une direction axiale entre la zone de carénage (26) externe en forme d'anneau de capot, et la roue à palettes du ventilateur (3), **caractérisé en ce que** le volet de refroidissement (4) forme une unité modulaire déterminée formée d'un seul tenant, en vue de l'insertion entre le refroidisseur (18) et les bras rayonnants (19) du carénage de refroidisseur (2), **en ce que** des tourillons de palier (7, 8) radiaux internes et radiaux externes des ailettes (6) du volet de refroidissement (4) sont enfermés entre un anneau de montage (9) et une bague d'arrêt (10) et des tourillons d'ajustement (16) disposés à l'extrémité externe des ailettes (6) s'engagent dans des logements de tourillon (17) d'un anneau de réglage (13), qui est encliqueté par les moyens à encliquetage (14, 15) avec un anneau de montage (9).

2. Dispositif selon la revendication 1, **caractérisé en ce que** dans un volet de refroidissement (4) ouvert les ailettes (6) de celui-ci s'étendent à l'intérieur de l'espace entre les bras rayonnants (19) du carénage de refroidisseur (2).

3. Dispositif selon la revendication 1 ou 2, **caractérisé en ce que** les bras rayonnants (19) du carénage de refroidisseur (2) s'étendent de manière inclinée vers le refroidisseur (18), jusqu'au moyeu (31) du carénage de refroidisseur (2).

4. Dispositif selon l'une des revendications 1 à 3, **caractérisé en ce que** les axes de pivotement (20) des ailettes (6) du volet de refroidissement (4), inclinés à distance du refroidisseur (18), sont orientés radialement vers l'extérieur.

5. Dispositif selon la revendication 4, **caractérisé en ce que** l'angle d'inclinaison des ailettes (6) se situe dans la plage allant de 4° à 8°.

6. Dispositif selon l'une des revendications 1 à 5, **caractérisé en ce que** dans un volet de refroidissement (4) complètement ouvert un bord d'attaque (21) des ailettes (6) de celui-ci est orienté parallèlement au refroidisseur (18).

7. Dispositif selon l'une des revendications 1 à 6, **caractérisé en ce qu'**au moins une zone d'ailettes (25) en forme de bande des ailettes (6) en position ouverte tourné vers le refroidisseur (18), formant le bord d'attaque (21) des ailettes, est constituée d'un matériau souple et est moulée sur un matériau plus solide des ailettes (6).

8. Dispositif selon l'une des revendications 1 à 7, **caractérisé en ce que** l'anneau de réglage (13) est disposé sur le côté du volet de refroidissement (4) tourné vers le refroidisseur (18).

9. Dispositif selon la revendication 8, **caractérisé en ce qu'**un actionneur (5) disposé sur une zone de carénage (26) externe en forme de capot vient en prise dans une fente de commande (34) par le biais d'un bras de manivelle (28) et d'un pivot sphérique (27) disposé sur celui-ci, laquelle fente de commande (34) est disposée dans une saillie (29) de l'anneau de réglage (13) formée à l'extérieur sur l'anneau de réglage (13).

10. Dispositif selon l'une des revendications 1 à 9, **caractérisé en ce que** les tourillons de palier (8, 7) des ailettes (6) radiales externes et radiales internes sont montés dans des évidements en forme de demi-coquille (11,12) d'un anneau de montage (9) et d'une bague d'arrêt (10) du volet de redfroidissement (4), l'anneau de montage (9) étant fixé sur le carénage de refroidisseur (2).

11. Dispositif selon la revendication 10, **caractérisé en ce que** des découpes en forme de demi-coquille (11,12) de l'anneau de montage (9) et de la bague d'arrêt (10) sont disposées en direction des tourillons de palier (7, 8) de manière décalée les unes par rapport aux autres.

12. Dispositif selon l'une des revendications 1 à 11, **caractérisé en ce qu'**un faisceau de câblage électrique (30) de la commande électrique de ventilateur (23) s'étend le long d'un des bras rayonnants (19) du carénage de refroidisseur.

13. Dispositif selon l'une des revendications 1 à 12, **caractérisé en ce que** l'anneau de réglage (13) de celui-ci est disposé sur le côté de celui-ci tourné vers le refroidisseur (18).

14. Dispositif selon la revendication 13, **caractérisé en ce qu'**une saillie (29) latérale déterminée est prévue dans plusieurs emplacements circonférentiels de l'anneau de réglage (13) en vue de la mise en prise d'un actionneur (5).
